# EUROPEAN PATENT SPECIFICATION

(11) **EP 2 639 092 B1**
(45) Date of publication and mention of the grant of the patent: **17.10.2018**
(21) Application number: 10859608.1
(22) Date of filing: 12.11.2010
(51) Int. Cl.: B60K 11/06, B60K 1/04, B60L 11/18, B62J 9/00, B62J 99/00

(54) **MOUNTING STRUCTURE OF ELECTRICITY STORAGE DEVICES IN AN ELECTRIC VEHICLE**
MONTAGESTRUKTUR VON STROMSPEICHERVORRICHTUNGEN BEI EINEM ELEKTROFAHRZEUG
STRUCTURE DE MONTAGE DES DISPOSITIFS DE STOCKAGE D'ÉLECTRICITÉ DANS UN VÉHICULE ÉLECTRIQUE

(43) Date of publication of application: 18.09.2013
(73) Proprietor: Kawasaki Jukogyo Kabushiki Kaisha, Kobe-shi, Hyogo 650-8670 (JP)
(72) Inventor: MATSUDA, Yoshimoto, Hyogo 673-8666 (JP)
(74) Representative: Witte, Weller & Partner Patentanwälte mbB
(86) International application number: PCT/JP2010/006647
(87) International publication number: WO 2012/063292

(56) References cited:
- JP-A- 5 105 148
- JP-A- 7 320 794
- JP-A- H05 105 148
- JP-A- H07 320 794
- JP-A- 2003 182 669
- JP-A- 2007 253 659
- JP-A- 2008 247 166
- JP-A- 2010 083 333
- JP-U- H0 363 064
- US-A1- 2004 065 491

## Description

### TECHNICAL FIELD

The present invention relates to an installation structure of an electric storage device in an electric car like an electric car, an electric two-wheeled vehicle, or a hybrid car.

### BACKGROUND ART

Recently, also from a standpoint of future depletion of oil resources as increasing environmental awareness, reduction of fuel consumption of cars, motorcycles, etc. is more strongly demanded than ever before. On the other hand, secondary batteries represented by lithium-ion batteries have significantly advanced, attempt of enabling electroactuation of driving power like electric cars or hybrid cars has been increasing.

However, the energy density of the secondary cell is still several orders of magnitude lower than that of petroleum fuel, such as gasoline and thus several batteries need to be installed to guarantee a travel distance which is sufficient for practical use. For this reason, for two-wheeled vehicles which do not have a sufficient margin in space, various studies have been conducted on an installing structure of a battery. For example, Patent Document 1 discloses a structure in which two batteries are installed on left and right sides, respectively in a space under a foot-rest board of an electric motorcycle, and external connection terminals are positioned in a rear portion of each battery. With this arrangement, a space for accommodating power cables can be secured and the length of the power cables can be shortened.

Furthermore, Patent Document 2 discloses a structure in which in a hybrid-type scooter including an engine and an electric motor, a battery assembly in which many cylindrical batteries are arrayed is accommodated in a front cowl including a leg shield. In addition, a front cover (a portion of a front cowl) of the battery assembly is provided with an air intake port, a back cover of the battery assembly is provided with an air exhaust port, and the battery assembly is cooled by a traveling wind.

Yet furthermore, in a saddle-type electric vehicle disclosed in Patent Documents 3, many battery cells are aligned to correspond to the shapes thereof in a large battery box disposed to be surrounded by a main frame, a down frame, and a pivot frame of a vehicle body. In addition, the document describes that the battery box is "formed such that the traveling wind from the front side of a vehicle is introduced from a front portion and can be discharged through a rear upper portion" (claim 2, etc.). JP H 07 320 794 A discloses an installing structure of electrical storage devices in an electric car according to the preamble of claim 1, comprising a cooling air inflow passage to uniformly cool a battery cell to prevent the dispersion in performance of each battery cell, and prevent the leak of electrolyte from the exhaust plug of the battery cell. The cooling air inflow passage is gradually narrowed toward the downstream side by slantingly arranging each battery cell so that the upstream side of the air inlet passage is raised.

### PRIOR ART DOCUMENTS

### PATENT DOCUMENTS

Patent Document 1: Japanese Patent Application Laid-open No. 05-105148
Patent Document 2: Japanese Patent Application Laid-open No, 2006-96105
Patent Document 3: Japanese Patent Application Laid-open No. 2010-83333

### SUMMARY OF THE INVENTION

### PROBLEMS TO BE SOLVED BY THE INVENTION

However, in the above-described first conventional example, Patent Document 1, the cooling of the battery is not taken into consideration at all. On the one hand, in the second conventional example, Patent Document 2, the traveling wind is made to blow against the assembly in which the battery is arrayed and accommodated in a resin case member. Therefore, when it is combined with the case member of the battery, it will result in a double layer case member. Therefore, there is still room for improvement in cooling efficiency.

The third conventional example, Patent Document 3, covers introduction of the traveling wind into the battery box but does not describe about a concrete structure for discharging the traveling wind at all. This conventional example features that the cells are arrayed and disposed in conformity with the shape of the box in order to store much more cells in the battery box, but it is difficult to associate this example with the structure in which the traveling wind smoothly escapes the inside of the box.

Although the layout of the power cable (bus bar) which connects connection terminals of the multiple batteries to each other is not described in any of the conventional examples, since not only the body of the battery but the power cable through which a large amount of current flows increase in temperature, there is concern about deterioration of the covering and/or increase in electrical resistance.

Accordingly, an object of the present invention is to provide a structure which can effectively cool down not only electric storage devices such as batteries but also power cables and connection terminals in a case where multiple electric storage devices are collectively installed as a electric storage device group in a vehicle body.

### SOLUTIONS TO THE PROBLEMS

The subject matter of the present invention is an installing structure of electric storage devices in an electric car as defined by the features of claim 1, which includes an electric motor for traveling and multiple electric storage devices configured to store power supplied to the electric motor, in which a traveling wind passage extending in forward and rearward direction, through which a traveling wind, generated by traveling of the electric car, passes, is formed in an electric storage device group including the plurality of the electric storage devices, and connection terminals of the electric storage devices and a power cable that connects the connection terminals to each other are disposed in a manner of facing the traveling wind passage.

With this configuration, since the traveling wind, which the electric car receives under traveling, passes through the traveling wind passage which extends in forward and rearward direction and is formed between the plurality of electric storage devices of the electric storage device group, the electric storage devices are effectively cooled by the traveling wind, and even the power cable facing the traveling wind passages and the connection terminals of the electric storage devices connected to the power cables can be effectively cooled.

More specifically, at least two electric storage devices in the electric storage device group are divided into either upper and lower side electric storage devices, respectively or left and right side electric storage devices, respectively, and the traveling wind passage is disposed between the upper and lower side electric storage devices or between the left and right side electric storage devices. According to this configuration, the traveling wind passage that faces the power cable to which a high voltage is applied and the connection terminals are located in the electric storage device group. Accordingly, the configuration is advantageous in terms of securing safety.

In this case, the plurality of electric storage devices may be divided into two modules, a right side module and a left side module, and each module may be collectively connected. Each module may be installed on the electric car so that the module can be collectively attached to and detached from the electric car, and the modules may be electrically connected in series to each other via a relay. According to this configuration, since the left and right modules of the electric storage device group can be attached and detached, module by module, maintainability is good, a voltage of each module can be suppressed to be lowered, and safety during maintenance work is highly secured.

A partition plate having an electrically insulating property may be disposed in the traveling wind passage, between the left and right electric storage devices or between the upper and lower electric storage devices. With this configuration, even when a position of the electric storage device is changed due to a shock, short-circuiting is not likely to occur.

Here, a body frame of the electric car includes a head pipe that supports a steering shaft and a main frame that extends rearward from the head pipe. In a case where the main frame is bifurcated into left and right frame members, the electric storage device group may be installed to be interposed between the frame members.

In this case, since the electric storage device group having a load can be arranged near a roll shaft of a vehicle body, this configuration is advantageous in terms of enhancing motion performance of the electric car. Furthermore, in the case where the electric car is a motorcycle, when the motorcycle falls down, the electric storage device group can be protected by the left and right frame members.

On the one hand, when the main frame is located in the center of the body in a width direction, the plurality of electric storage devices may be divided into left and right groups such that the traveling wind passage may be formed under the main frame, and a bracket may be provided to hang downward from the main frame, in the traveling wind passage, and the electric storage devices may be installed to the bracket.

With this configuration, since the bracket can be disposed using the traveling wind passage formed in the electric storage device group, and the electric storage device can be attached and detached without interfering with the main frame, in the center of the vehicle body, maintainability is excellent.

Furthermore, if a wind guiding duct is provided to guide the traveling wind into the traveling wind passage from the front side, the cooling effect can be further improved. Furthermore, for an electric motor which generates more heat than the electric storage device, stable cooling can be achieved by using a liquid cooling method. At this point, a heat exchanger through which a cooling liquid flows for this purpose may be disposed in front of the traveling wind passage. With this configuration, escaping of the traveling wind in the heat exchanger improves and the cooling efficiency of the electric motor improves.

Furthermore, in regards to the electric storage device group, in a case where electronic equipment such as an inverter, a converter, or a controller, is disposed next to at least one electric storage device, the traveling wind passage may be formed between the electronic equipment and the electric storage device disposed next to the electronic equipment. Even in this case, since neither high voltage power cables nor the connection terminals are exposed to the outside of the electric storage device group, it is advantageous in terms of securing safety.

### EFFECTS OF THE INVENTION

According to the installing structure of the electric storage device according to the present invention, since the traveling wind passage extending in forward and rearward direction is formed between the plurality of electric storage devices of the electric storage device group, which are installed in the electric car, and the high voltage power cables and the connection terminals are arranged in a manner of facing the traveling wind passage, the electric storage devices can be effectively cooled by the traveling wind. Furthermore, since even the high voltage power cables are also cooled, the deterioration of the covering of the power cables due to the heat and an increase in the electric resistance can be suppressed.

When the traveling wind passage is formed between the electric storage devices in the electric storage device group or between the electric storage device and other electronic equipment, since the high voltage power cables and/or the connection terminals are located inside the electric storage device group, the safety can be easily secured.

### BRIEF DESCRIPTION OF THE DRAWINGS

Fig. 1 is a right side view illustrating main parts of an electric motorcycle according to a first embodiment of the present invention.
Fig. 2 is a front view illustrating arrangement of batteries when the electric motorcycle is viewed from the front.
Fig. 3 is a perspective view illustrating an installing structure of the battery when the electric motorcycle is viewed obliquely from the back.
Fig. 4 is a plan view illustrating the installing structure of the battery when the electric motorcycle is viewed from above.
Fig. 5 is a view, in the same condition as Fig. 4, which illustrates a modification in which a traveling wind passage is provided between a battery and an inverter.
Fig. 6 is a view, in the same condition as Fig. 3(a), which illustrates a modification in which a battery block is accommodated in a box.
Fig. 7 is a view of the same modification, in the same condition as Fig. 4.
Fig. 8 is a view, in the same condition as Fig. 4, which illustrates a modification in which a battery block is accommodated in a box and a traveling wind passage is provided between a power control unit and the box.
Fig. 9 is a view according to a second embodiment which is in the same condition as Fig. 1.
Fig. 10 is a view according to a second embodiment which is in the same condition as Fig. 2.

### EMBODIMENTS OF THE INVENTION

Hereinafter, embodiments of the present invention will be described with reference to the drawings. A concept of a direction used in the following description is based on a direction viewed from a driver riding the electric two-wheeled vehicle.

### (FIRST EMBODIMENT)

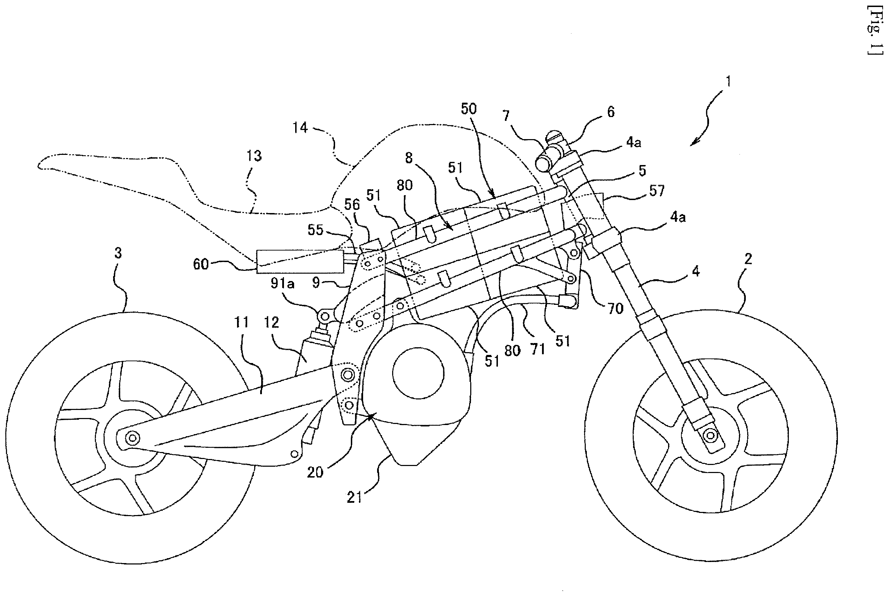

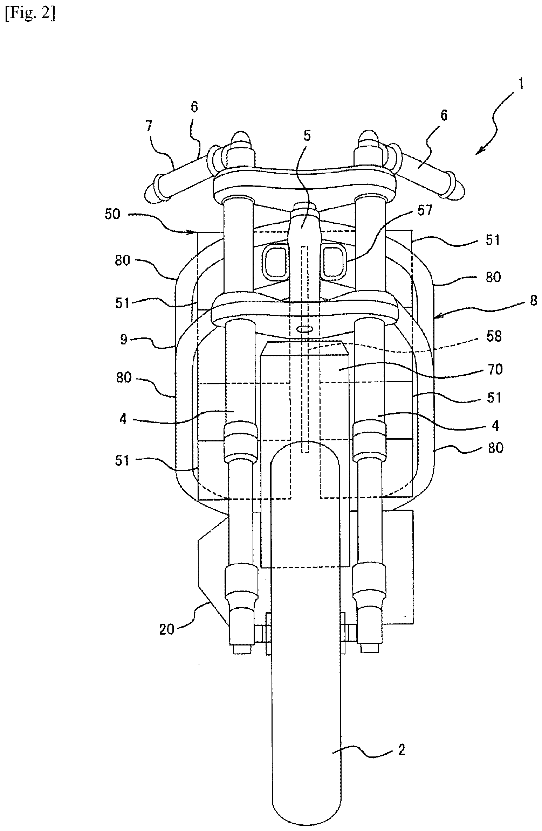

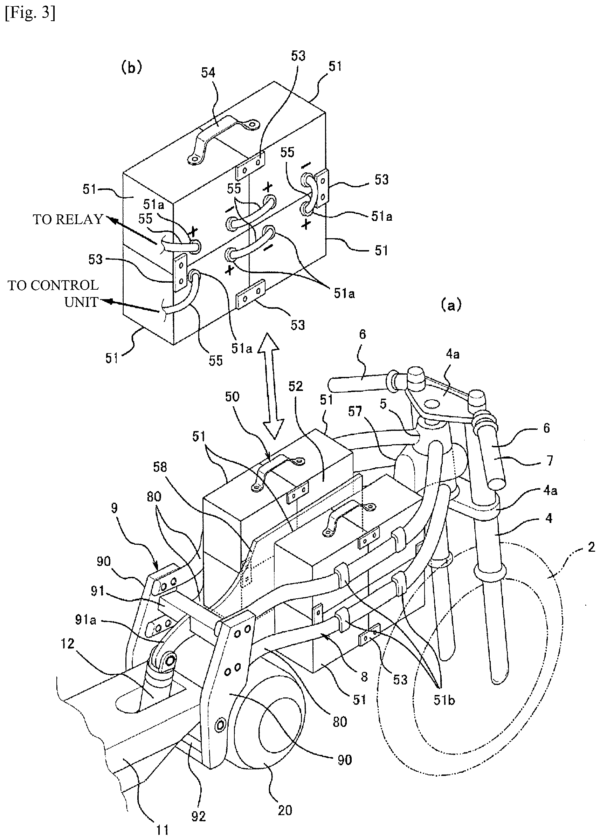

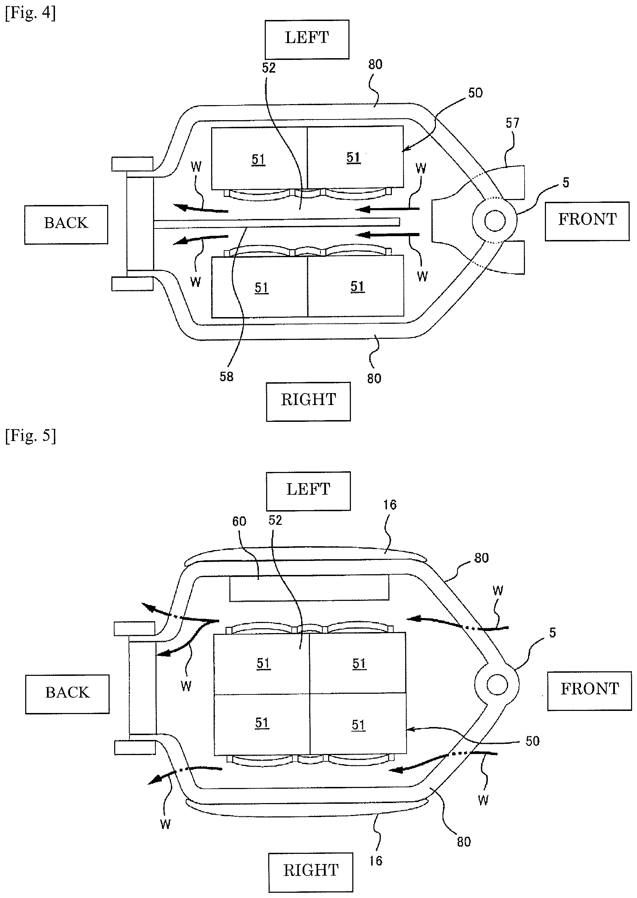

Fig. 1 is a right side view illustrating main parts, such as a body frame, a wheel, a power plant, and a battery, of an electric motorcycle 1 (electric car) according a first embodiment of the present invention, and Fig. 2 is a front view illustrating the same. Fig. 3 is a perspective view, illustrating an installing structure of a battery to a vehicle body, obliquely viewed from the rear side, and Fig. 4 is a plan view illustrating the same.

As illustrated in Fig. 1, the electric motorcycle 1 includes a front wheel 2 as a steering wheel and a rear wheel 3 as a driving wheel. The front wheel 2 is freely rotatably supported by lower ends of a pair of left and right front forks 4 which almost vertically extend. On the one hand, upper portions of the front forks 4 are supported by a steering shaft (not illustrated) via upper and lower brackets 4a.

The steering shaft is freely rotatably supported in a state of being inserted in a head pipe 5 which is disposed on the vehicle body side, and constitutes a steering shaft. That is, a handle 6 horizontally extending is attached to the upper bracket 4a, and the driver can steer the front fork 4 and the front wheel 2 around the steering axis by using this handle 6. A right end of the handle 6 is gripped by the driver's right hand, and provided with an accelerator grip 7 which is rotatable by a twist of the driver's wrist.

A body frame of the electric motorcycle 1 includes, for example, a main frame 8 which extends rearward and slightly inclines downward from the head pipe 5. As illustrated in Figs. 2 to 4, the main frame 8 is bifurcated into left and right frame members from a front end portion thereof which is welded to the head pipe 5, and each of the left and right frame members includes upper and lower pipe members 80 (frame members).

These pipe members 80 extend rearward from the head pipe 5 while becoming farther from each other toward the rearward direction first, then are bent inward to approach each other, and then extend in parallel with each other with a constant distance between them. In addition, they are connected to the pivot frame 9 after being bent inward to approach each other from the parallel points. Although not illustrated in the drawings, side cowls made of resin are installed in a manner of covering the outside surfaces (the outside surfaces of the electric motorcycle 1) of each of the left and right pipe members 80, respectively.

As illustrated in Fig. 3, the pivot frame 9 is a rectangular frame formed by connecting a pair of left and right pillars 90, vertically extending, by two cross members 91 and 92 at upper end portions and lower end portions, respectively. Rear end portions of the pipe members 80 are overlapped and are fastened to inside surfaces of the left and right pillars 90, respectively. An extension 91a is formed to extend rearward and slightly inclines downward from a center portion of the upper side cross member 91, and pivotably supports an upper end portion of a damper 12 described below.

A front end portion of a swing arm 11 which supports the rear wheel 3 is held between the left and right pillars 90 of the pivot frame 9 in such a manner that the front end portion can vertically swing. The swing arm 11 extends rearward and slightly inclines downward from a swing pivot shaft. In the example of the drawing, a rear portion of the swing arm 11 is bifurcated into two branches and the rear wheel 3 is supported between the two branches in a freely rotatable manner. On the one hand, a bulging portion which bulges downward is formed on a front portion of the swing arm 11, thereby supporting a lower end of the damper 12. The damper 12 is expanded and contracted with vertical swinging of the swing arm 11.

As indicated by an imaginary line in the drawing, a driver's seat 13 is disposed above the swing arm 11, and a dummy tank 14 is disposed in front of the driver's seat 13. In the case of an electric motorcycle, a fuel tank is unnecessary, but the dummy tank 14 is useful because a driver, seating in a horse-riding posture, would insert it between his/her knees. The inside of the dummy tank 14 is used as a storage space for storing a helmet and the like.

In a space under the dummy tank 14, that is, a portion near the center of the vehicle body, ranging from the head pipe 5 to the pivot frame 9 in the electric motorcycle 1, a motor unit 20 including a traveling motor (not illustrated) that is an electric motor, and a battery block 50 (a electric storage device group) including multiple batteries 51 serving as electric storage devices that store electricity to be supplied to the traveling motor are disposed. The motor unit 20 is supported by the left and right pillars 90 of the pivot frame 9, and the pipe members 80 of the main frame 8.

Although described in detail below, the battery block 50 is disposed such that the left and right side surfaces are surrounded by four pipe members 80 of the main frame 8, and a power control unit 60 which controls the power supplied from each battery 51 of the battery block 50 to the traveling motor is disposed behind the battery block 50.

Although a detailed description is not given, in the present embodiment, the traveling motor is a motor/generator which can perform a motor operation and a power generation operation, performs the motor operation with the electric power supplied from the battery 51 via the power control unit 60, and outputs a driving force to the rear wheel 3. On the one hand, the traveling motor operates as a generator during regenerative braking of the electric motorcycle 1. In this mode, the generated alternating current is converted into a direct current by an inverter of the power control unit 60 and is then stored in the battery 51. Such motor control and charge/discharge control of the battery 51 are performed using a known technique.

### - Mounting Structure of Battery -

As illustrated in Figs. 3 and 4, the battery block 50 includes, for example, eight batteries 51. The batteries are divided into two groups each including four batteries and are grouped into left and right groups which are supported on the left and right pipe members 80 of the main frame 8, respectively. A space portion (a traveling wind passage 52 described below), extending in forward and rearward direction of the electric motorcycle 1, is formed between them. As illustrated in Fig. 3(b) in which the four left side batteries 51 are removed, in this example, every four batteries of the left side four batteries 51 and the right side four batteries 51 are collectively connected to form a module so as to be collectively attached and detached.

The left side module will be described, two batteries 51 each having a rectangular shape are arranged in forward and rearward direction of the electric motorcycle 1, other two batteries are stacked on the former ones, respectively, and the multiple batteries are connected by multiple connection pieces 53 so that they are integrated into one body. In the example of the drawing, a holder 54 is attached to the two upper-layer batteries 51 while extending over the upper surfaces of the two upper-layer batteries 51. Positive and negative connection terminals 51a of the batteries 51 are connected to each other by the power cables 55 and disposed in front surfaces, on the right-hand side in Fig. 3(b), that is, side surfaces of the batteries, which are disposed inner side in the vehicle when the batteries are installed in the electric motorcycle 1 as illustrated in the same drawing (a).

Specifically, according to the example of the drawing, in the case of the two batteries 51 in a lower layer, the connection terminals 51a are located in front and rear positions, respectively at an upper portion of the right side surface. The positive terminal is disposed in a relatively front side position and the negative terminal is disposed in a relatively rear side position. On the other hand, the two batteries 51 in the upper layer are vertically inverted with respect to the two batteries in the lower layer, so that the negative terminal is located in a relatively front side position and the positive terminal is located in a relatively rear side position at a lower portion of the right side surface. Thus, the power cables 55 extend from the positive terminal of the battery 51 disposed on a lower-layer rear side to the negative terminal of the battery 51 disposed on a lower-layer front side, from the positive terminal of the battery 51 disposed on the lower-layer front side to the negative terminal of the battery 51 disposed on an upper-layer front side, and from the positive terminal of the battery 51 disposed on the upper-layer front side to the negative terminal of the battery 51 disposed on the upper-layer rear side, respectively.

That is, the four batteries 51 are connected in series to each other. In addition, the positive terminal of the battery 51, disposed on the upper-layer rear side, which has the highest potential is connected to a relay 56 (illustrated in Fig. 1) provided in the vehicle body by the power cable 55. The negative terminal of the battery 51, disposed on the lower-layer rear side, which has the lowest potential is connected to the power control unit 60 (refer to Fig. 1) not illustrated in Fig. 3(b) by the power cable 55.

Although a detailed description is not given, the module including the four right side batteries 51 is configured similarly, and the four batteries 51 are connected collectively in a sense of physical connection and connected in series to each other in a sense of electrical connection. The negative terminal of the battery 51, disposed on the lower-layer rear side, which has the lowest potential is connected to the relay 56, and the positive terminal of the battery 51, disposed on the upper-layer rear side, which has the highest potential is connected to the power control unit 60. That is, in this example, the left side and right side modules of the batteries 51 are connected in series to each other via the relay 56, and the voltage of each module is about half a high voltage required for traveling drive of the electric motorcycle 1.

The connection terminals 51 and the power cables 55 are disposed on the inside (a center portion in the width direction of the electric motorcycle 1, which faces the traveling wind passage 52) of the batteries 51, but as illustrated in Fig. 3(a), J-shaped hooks 51b, protruding outward from the outer side surfaces of the respective batteries 51 and then being bent downward, are disposed on the opposite side, the outside surface (the side surface being far from the center in the width direction of the electric motorcycle 1). The J-shaped hooks 51b are latched to the pipe members 80 of the main frame 8. By the hooks 51b, the four batteries 51 of each module are installed and fixed to the main frame 8 of the electric motorcycle 1 by a fastening member, such as a bolt (not illustrated).

Then, if a total of eight batteries 51 are installed as one battery block 50 such that every four batteries 51 of the left and right modules are installed to the main frame 8 of the electric motorcycle 1 while securing a predetermined gap between the left and right modules, the traveling wind passage 52 is formed in the center in the crosswise direction. With this arrangement, traveling wind is made to smoothly flow through the traveling wind passage 52 during the traveling of the electric motorcycle 1. In the example of the drawing, a wind guiding duct 57 is provided in a manner of corresponding to an upper side portion of the front end opening of the traveling wind passage 52, and a radiator 70 (heat exchanger) described below is formed in a manner of corresponding to a lower side portion of the front end opening of the traveling wind passage 52.

The wind guiding duct 57 is formed by assembling resin-molded products, for example, and is bifurcated into left and right portions so that the head pipe 5 is interposed between them. On the one hand, according to the example of the drawing, a rear portion of the wind guiding duct 57 has a longitudinal oval-shaped cross section and is positioned at a height corresponding to the upper-layer batteries 51 of the battery block 50. Thus, the traveling wind introduced from both left and right openings of the wind guiding duct 57, which are disposed on the front side, meets each other to form one current and is then lead to the traveling wind passage 52, disposed on the rear side, as indicated by an arrow w in Fig. 4. Similarly, a portion of the traveling wind which has passed by the radiator 70 meets the current of the traveling wind to flow together to the traveling wind passage 52 disposed on the rear side.

The traveling wind which has been led to the traveling wind passage 52 becomes to smoothly flow to the rear side as indicated by the arrow w in Fig. 4. In this case, not only the inside surface of the batteries 51 directly exposed to the traveling wind is effectively cooled, but also the connection terminals 51a disposed on the inside surface of the batteries 51 while facing the traveling wind passage 52 and the power cables 55 that connect the connection terminals 51a are also exposed to the traveling wind and effectively cooled.

Since the power cable 55 to which the high voltage is applied and the connection terminals 51a, connected to the power cable, face the traveling wind passage 52 disposed in the center of the battery block 50, and a driver of the electric motorcycle is not likely to be in contact with the power cable and the connection terminal, this arrangement is desirable in terms of securing safety. As illustrated in Figs. 3 and 4, according to the present embodiment, a partition plate 58 which has an electrically insulating property is disposed between the left and right batteries 51, that is, in the traveling wind passage 52. Therefore, even when the electric motorcycle 1 undergoes a shock, short-circuiting of the connection terminals 51a of the batteries 51 and the power cable 55 is not likely to occur.

The batteries 51 are air-cooled by the traveling wind as described above, and aside from that, according to the present embodiment, the traveling motor is cooled by non-conducting oil (liquid cooling). That is, although illustration is omitted, a spray nozzle which sprays oil to a stator of the traveling motor is provided inside the motor unit 20, and the oil which drops off from the stator is temporarily stored in an oil pan 21 (refer to Fig. 1) disposed in a lower portion of a case member of the motor unit 20.

In addition, an oil pump which pumps up the stored oil is disposed in the oil pan 21, and the pumped-up oil reaches the radiator 70, which are disposed under the wind guiding duct 57, while passing through the inside of a hose 71 connected to the case member of the motor unit 20. The oil which has heat-exchanged with the traveling wind in the radiator 70 is supplied to the power control unit 60 through a hose (not illustrated), in order to cool the inverter, etc. After that, the oil is returned to the motor unit 20 through another hose (not illustrated).

In the electric motorcycle 1 according to the present embodiment as described above, not only motion performance can be secured by disposing the motor unit 20 and the battery block 50 near the center of the vehicle body, but also the batteries 51 can be effectively cooled by the traveling wind by dividing the battery block 50 including the eight batteries 51 into the left and right modules so that the traveling wind passage 52 can be formed in the center.

Moreover, the power cables 55 and the connection terminals 51a of the batteries 51 which are disposed in the traveling wind passage 52 while facing thereto are also effectively cooled, so that the deterioration of the covering of the power cables 55 can be suppressed. Furthermore, since the power cables 55 to which the high voltage is applied, and the like are located in the inner position of the battery block 50, safety can be easily secured during regular use of the batteries. Yet furthermore, since the partition plate 58 is provided, the shot-circuiting is prevented and the safety is also easily secured.

Yet furthermore, since left four batteries 51 and right four batteries are collectively connected to form the module, and thus the batteries 51 can be easily attached to and detached from the electric motorcycle 1, maintainability improves. Yet furthermore, since the voltage of each module is about half the high voltage required for traveling drive of the electric motorcycle 1, the safety during attachment/detachment work is easily secured.

On the other hand, in regards to the traveling motor which generates more heat than the batteries 51, it is cooled by the cooling oil which circulates through the route to radiator 70. For this reason, a high cooling effect is stably acquired. Although the radiator 70 is located in front of the battery block 50, since the traveling wind passage 52 is located behind it, the traveling wind which blows toward the radiator 70 can easily escape. Therefore, the cooling efficiency of the traveling motor may be also improved.

### - Modification -

The above-described configuration of the battery block 50 is only an example, and there may be various modifications. Namely, a traveling wind passage 52 is not necessarily provided in the center of a battery block 50 in a crosswise direction of the battery block, and it is not necessarily located in the center of a vehicle body in a width direction. The number of the batteries 51 is not necessarily limited to eight of course, and the number of the batteries 51 divided into left and right modules is not necessarily equal to each other. For example, if the weight is lopsided to either one side of the left and right sides in the motor unit 20, the number of the batteries 51 on the other side may be larger than that of the former one side.

The traveling wind passage 52 may not be provided between the batteries 51 that constitute the battery block 50 like the above-described embodiment, but the traveling wind passage 52 may be formed between the batteries 51 and electronic equipment which is disposed next to the batteries 51. Fig. 5, for example, illustrates a modification in which a power control unit 60 is disposed on the left side of a battery block 50, and a traveling wind passage 52 is provided between the power control unit 60 and a battery 51 which adjoins the power control unit 60. In the example of this drawing, another traveling wind passage 52 is provided between the battery block 50 and a side cowl 16 which is disposed on the right side of the battery block 50.

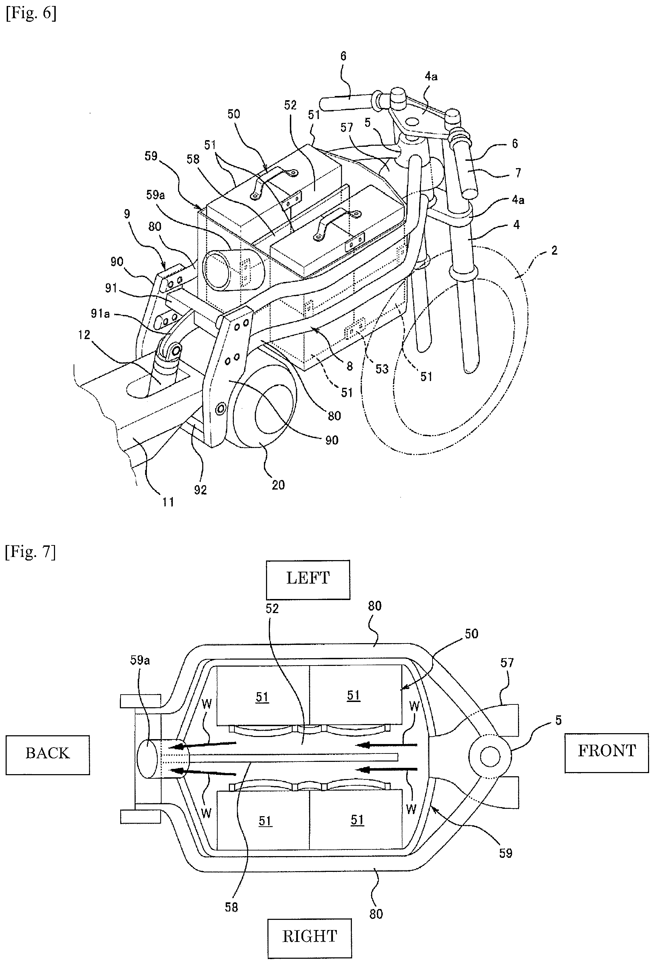

The battery block 50 may be stored in a box from a viewpoint of waterproofing or battery protection. That is, as illustrated in Fig. 6, a rectangular box 59, made of FRP and provided with an opening in an upper face thereof, is fixed to a pipe member 80 of a main frame 8, and the batteries 51, divided into left and right modules, are stored in the box. In this case, as illustrated also in Fig. 7, a wind guiding duct 57 is connected to an opening of a front portion of the box 59 to take in traveling wind, and an exhaust duct 59a is provided at a rear portion of the box 59. With this configuration, the traveling wind may be made smoothly flow to the rear side.

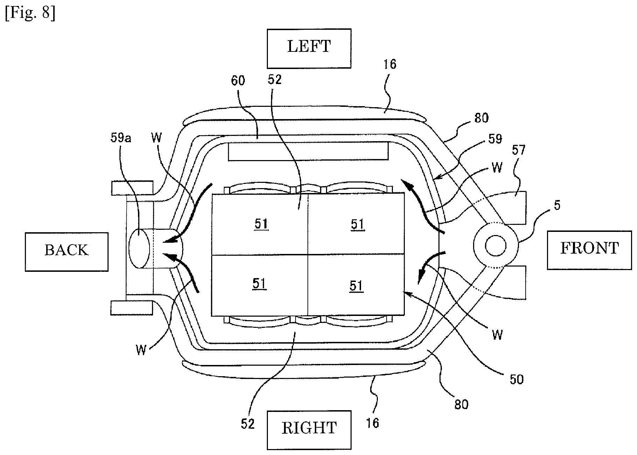

An electric fan may be provided so that air may be actively discharged from the exhaust duct 59a. In addition, as illustrated in Fig. 8, the battery block 50 may be accommodated in the box 59 and the traveling wind passage 52 may be provided between the power control unit 60 and the box. The upper opening of the box 59 may be covered so that a rider may not access to the box 59 during regular use of the electric motorcycle 1. A filter may be installed in the opening of the front portion of the box 59, which communicates with the wind guiding duct 57.

### (SECOND EMBODIMENT)

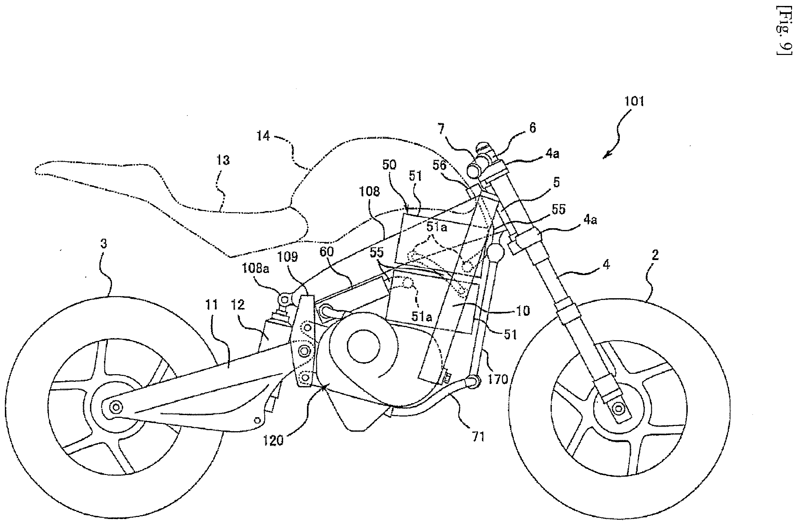

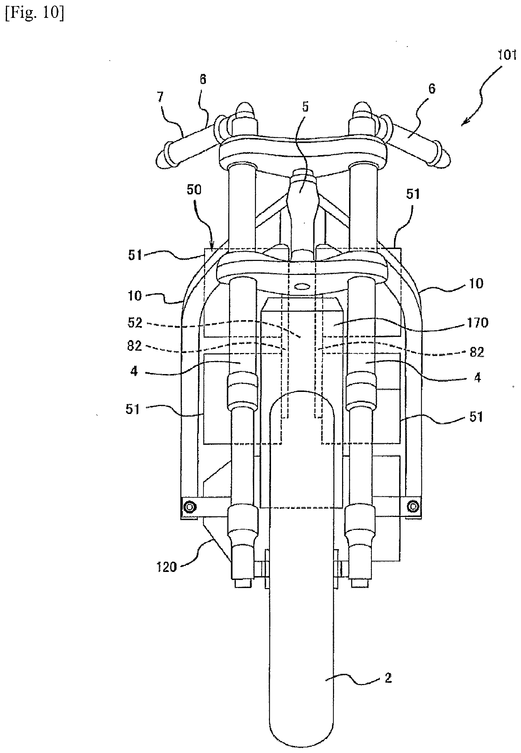

Figs. 9 and 10 illustrate an electric motorcycle 101 according to a second embodiment of the present invention. These drawings correspond to Figs. 1 and 2, respectively which are described above. Although the electric motorcycle 101 of the second embodiment is different from that of the first embodiment mainly in the structure of a body frame and a power plant, since there is no difference in the other fundamental structures, equivalent members are described with identical reference signs and the description thereof is omitted.

First, the body frame of the second embodiment includes a main frame 108 extending rearward and slightly inclining downward from a head pipe 5, and a pair of left and right down frames 10 that bifurcate and extend downward from the head pipe 5. An upper frame portion of a pivot frame 109 which is a rectangular frame, for example, is welded to a rear end portion of the main frame 108 in a manner that it extends leftward and rightward while perpendicularly intersecting the rear end portion of the main frame 108.

On the one hand, as illustrated in Fig. 10, the down frames 10 incline downward and extend leftward and rightward from the head pipe 5, respectively, toward the downward direction. After being spread until a distance between them reaches a predetermined value, they extend downward while the distance between them is maintained at a constant value. In addition, while lower ends of the left and right down frames 10 are fastened to a front end portion of a motor unit 120, a rear end portion of the motor unit 120 is fastened to the pivot frame 109. That is, in the present embodiment, a case member of the motor unit 120 constitutes a portion of the body frame.

Furthermore, a battery block 50 including four batteries 51 is installed on an upper front side of the motor unit 120. In this example, although each battery 51 is large-sized compared with that of the first embodiment, they are divided and installed on left and right sides of the main frame 108 such that each side of the left and right sides is provided with two batteries. Furthermore, a traveling wind passage 52 (illustrated by a dotted line in Fig. 10) which longitudinally extends and passes the center of the battery block 50 is formed in the middle of the battery block.

As indicated by the dotted line in Fig. 9, the batteries 51 in each side, the left side or the right side, are connected in series to each other in a sense of electrical connection like in the first embodiment. That is, among the two batteries 51 on the right side in the drawing, a positive connection terminal 51a located in a rear side surface of the battery 51 in an upper layer is connected to a negative connection terminal 51a located in a front side surface of the battery 51 in a lower layer by a power cable 55. In addition, a negative connection terminal 51a located in the front side surface of the battery 51 in the upper layer is connected to a relay 56 by a power cable 55, and, on the one hand, a positive connection terminal 51a located in the rear side surface of the battery 51 in the lower layer is connected to a power control unit 60 which is located immediately behind it by a power cable 55.

The connection terminals 51a of the batteries 51 and the power cables 55 are disposed facing the traveling wind passage 52 like in the first embodiment. A pair of left and right brackets 82 perpendicular to the main frame 8 are located in the traveling wind passage 52, and each bracket 82 supports the two batteries 51 on the left side or the right side.

Although a detailed description is not given, the motor unit 120 of the present embodiment is provided with a multistage transmission device of a gear type aside from a traveling motor, and is longer in forward and rearward direction as compared with the motor unit 20 of the first embodiment. In order to use common oil for cooling of the traveling motor, and lubrication and cooling of the transmission device, a radiator 170 through which this oil circulates is made large-sized compared with the first embodiment, and is made into a shape which is longitudinally elongated in conformity with the shape of the traveling wind passage 52 of the battery block 50.

Accordingly, even in the case of the electric motorcycle 1 according to the second embodiment, the four batteries which constitute the battery block 50 are divided into left and right blocks and the traveling wind passage 52 is formed in the center in forward and rearward direction. With this configuration, effective cooling of the batteries 51 can be achieved. Furthermore, the power cables 55 facing the traveling wind passage 52 may be effectively cooled and the deterioration of the power cables can be suppressed.

Furthermore, since the power cable 55 or the like to which a high voltage is applied is located inside the battery block 50, safety during regular use is easily secured. The bracket 82 which supports the battery 51 also suppresses short-circuiting like the partition plate 58 in the traveling wind passage 52.

The batteries 51 arranged such that two are disposed on the right side and two are disposed on the left side can be removed from the bracket 82 by moving the batteries to the rear side or vertically, without interfering with the main frame 108, and they have good maintainability.

### (Other Embodiments)

Description of the aforementioned embodiments is merely exemplification, and does not limit the present invention, or application or use thereof. For example, although the eight batteries 51 are divided into two groups to be disposed on the left and right sides, respectively and the traveling wind passage 52 is formed between the two groups according to the first embodiment, but the invention is not limited thereto. For example, multiple batteries may be divided into two groups to be disposed on upper and lower sides, respectively. Alternatively, the multiple batteries may be divided first divided into two groups to be disposed on upper and lower sides, respectively, then upper or lower side batteries may be further divided into groups to be disposed on left and right sides, respectively, and the traveling wind passage may be provided therein.

In addition, the batteries may not be necessarily divided into groups, each including an equal number of batteries. For example, in the case of dividing left and right side groups, three batteries may be disposed on the left side and two batteries may be disposed on the right side. Furthermore, all of the multiple batteries which constitute a battery block are not necessarily divided into battery groups. That is, among the multiple batteries, at least two batteries are divided into left and right battery groups or upper and lower battery groups, and the traveling wind passage may be formed between the groups. In addition, the electric storage device is not limited to the battery, and, for example, a capacitor or the like may be used.

In addition, the motor units 20 and 120, and the power control unit 60 are not necessarily cooled using cooling oil like in each embodiment described above, but even these may be cooled using the traveling wind.

Furthermore, although each embodiment describes about an electric motorcycle 1, the electric car according to the invention is not limited to the motorcycle. For example, it may be an ATV (All Terrain Vehicle), a mechanical mule, or the like.

### Industrial Applicability

As described above, according to the installing structure according to the present invention, since not only the electric storage device but also the connection terminals thereof can be effectively cooled by the traveling wind, and the safety is easily secured, the invention is especially useful when it is used for an electric motorcycle.

### DESCRIPTION OF REFERENCE SIGNS

1: Electric motorcycle (vehicle)
5: Head pipe
8: Mainframe
   80: Pipe (frame member)
   82: Bracket
20, 120: Motor unit (traveling electric motor)
50: Battery block (electric storage device group)
51: Battery (electric storage device)
51a: Connection terminal
52: Traveling wind passage
55: Power cable
57: Wind guiding duct
58: Partition plate
60: Power control unit (electronic equipment)
70: Radiator (heat exchanger)

## Claims

1. An installing structure of electric storage devices in an electric car (1) which includes an electric motor (20, 120) for traveling and a plurality of the electric storage devices (51) configured to store power supplied to the electric motor (20, 120),
wherein a traveling wind passage (52) extending in forward and rearward direction, through which a traveling wind, generated with traveling of the electric car, can pass, is formed in an electric storage device group (50) including the plurality of the electric storage devices (51),
**characterized in that** at least two electric storage devices (51) within the electric storage device group (50) are divided into either upper and lower side electric storage devices, respectively or left and right side electric storage devices, respectively, and the traveling wind passage (52) is disposed between the upper and lower side electric storage devices or between the left and right side electric storage devices, and connection terminals (51a) of the electric storage devices (51) and a power cable (55) that connects the connection terminals (51a) to each other are disposed in a manner of facing the traveling wind passage (52).

2. The installing structure of the electric storage device according to claim 1, wherein the plurality of the electric storage devices (51) of the electric storage device group (50) is divided into two modules, a left side module and a right side module, and each module is collectively connected and installed so as to be collectively attached to and detached from the electric car (1).

3. The installing structure of the electric storage device according to claim 2, wherein the left and right side modules are electrically connected in series to each other via a relay.

4. The installing structure of the electric storage device according to any one of claims 1 to 3, wherein a partition plate having an electrically insulating property is disposed in the traveling wind passage (52), between the electric storage devices (51) divided into upper and lower side electric storage devices or left and right side electric storage devices.

5. The installing structure of the electric storage device according to any one of claims 1 to 4, wherein a body frame of the electric car (1) includes a head pipe (5) that supports a steering shaft and a main frame (8) that extends rearward from the head pipe (5),
the main frame (8) is bifurcated into left and right frame members, and
the electric storage device group (50) is interposed between the left and right frame members.

6. The installing structure of the electric storage device according to any one of claims 1 to 4, wherein a body frame of the electric car (1) includes a head pipe (5) that supports a steering shaft and a main frame (8) that extends rearward from the head pipe (5), and
the plurality of the electric storage devices (51) of the electric storage device group (50) are divided into left and right groups such that the main frame (8) is located in a center of a vehicle body in a width direction, and the traveling wind passage (52) is formed under the main frame (8).

7. The installing structure of the electric storage device according to claim 6, wherein the plurality of the electric storage devices (51) of the electric storage device group (50) is installed to a bracket (82) which hangs downward from the main frame (8), in the traveling wind passage (52).

8. The installing structure of the electric storage device according to any one of claims 1 to 7, wherein a wind guiding duct (57) is provided to guide traveling wind into the traveling wind passage (52) from a front portion of the traveling wind passage (52).

9. The installing structure of the electric storage device according to any one of claims 1 to 7, wherein a heat exchanger (70) through which a cooling liquid for cooling the electric motor (1) flows is disposed in front of the traveling wind passage (52).

10. The installing structure of the electric storage device according to claim 1, wherein electronic equipment (60) is provided next to at least one of the electric storage devices (51) of the electric storage device group (50), and the traveling wind passage (52) is formed between the electronic equipment (60) and the electric storage device (51) which is next to the electronic equipment (60).

## Patentansprüche

1. Installationsstruktur für elektrische Speichergeräte in einem Elektroauto (1), das einen Elektromotor (20, 120) zum Fahren und eine Vielzahl der elektrischen Speichergeräte (51), die dazu eingerichtet sind, eine dem Elektromotor (20, 120) zugeführte Leistung zu speichern, umfasst,
wobei ein sich in einer Vorwärts- und Rückwärtsrichtung erstreckender Fahrtwinddurchlass (52), durch den ein Fahrtwind, der durch das Fahren des Elektroautos erzeugt wird, passieren kann, in einer elektrischen Speichergerät-Gruppe (50), die die Vielzahl der elektrischen Speichergeräte (51) umfasst, ausgebildet ist,
**dadurch gekennzeichnet, dass** zumindest zwei elektrische Speichergeräte (51) innerhalb der elektrischen Speichergerät-Gruppe (50) entweder in jeweils ober- und unterseitige elektrische Speichergeräte, oder in jeweils links- und rechtsseitige elektrische Speichergeräte unterteilt sind, und der Fahrtwinddurchlass (52) zwischen den ober- und unterseitigen elektrischen Speichergeräte, oder zwischen den links- und rechtsseitigen elektrischen Speichergeräte angeordnet ist, und Anschlussklemmen (51a) der elektrischen Speichergeräte (51) und ein Stromkabel (55), das die Anschlussklemmen (51a) miteinander verbindet, in einer dem Fahrtwinddurchlass (52) zugewandten Weise angeordnet sind.

2. Installationsstruktur des elektrischen Speichergeräts nach Anspruch 1,
wobei die Vielzahl der elektrischen Speichergeräte (51) der elektrischen Speichergerät-Gruppe (50) in zwei Module, ein linksseitiges Modul und ein rechtsseitiges Modul, unterteilt ist, und jedes Modul kollektiv angeschlossen und installiert ist, um kollektiv in dem Elektroauto (1) eingebaut und von diesem vereinzelt zu werden.

3. Installationsstruktur des elektrischen Speichergeräts nach Anspruch 2,
wobei die links- und rechtsseitigen Module elektrisch über ein Relais in Reihe geschaltet sind.

4. Installationsstruktur des elektrischen Speichergeräts nach einem der Ansprüche 1 bis 3, wobei eine Trennwand, die eine elektrisch isolierende Eigenschaft hat, in dem Fahrtwinddurchlass (52) zwischen den elektrischen Speichergeräten (51), die in ober- und unterseitige elektrische Speichergeräte, oder in links- und rechtsseitige elektrische Speichergeräte unterteilt sind, angeordnet ist.

5. Installationsstruktur des elektrischen Speichergeräts nach einem der Ansprüche 1 bis 4, wobei ein Karosserierahmen des Elektroautos (1) ein Kopfrohr (5) umfasst, das eine Lenkwelle und einen Hauptrahmen (8) trägt, der sich von dem Kopfrohr (5) nach hinten erstreckt,
wobei der Hauptrahmen (8) in linke und rechte Rahmenteile gegabelt ist, und
wobei die elektrische Speichergerät-Gruppe (50) zwischen den linken und rechten Rahmenteilen eingefügt ist.

6. Installationsstruktur des elektrischen Speichergeräts nach einem der Ansprüche 1 bis 4, wobei ein Karosserierahmen des Elektroautos (1) ein Kopfrohr (5) umfasst, das eine Lenkwelle und einen Hauptrahmen (8) trägt, der sich vom Kopfrohr (5) nach hinten erstreckt, und
sich die Vielzahl der elektrischen Speichergeräte (51) der elektrischen Speichergerät-Gruppe (50) in linke und rechte Gruppen unterteilt, so dass der Hauptrahmen (8) in Breitenrichtung in einem Zentrum einer Fahrzeugkarosserie angeordnet ist, und der Fahrtwinddurchlass (52) unter dem Hauptrahmen (8) angeordnet ist.

7. Installationsstruktur des elektrischen Speichergeräts nach Anspruch 6,
wobei die Vielzahl der elektrischen Speichergeräte (51) der elektrischen Speichergerät-Gruppe (50) an einer Halterung (82) angebracht ist, die von dem Hauptrahmen (8) nach unten in den Fahrtwinddurchlass (52) hängt.

8. Installationsstruktur des elektrischen Speichergeräts nach einem der Ansprüche 1 bis 7, wobei ein Windleitkanal (57) vorgesehen ist, um Fahrtwind von einem vorderen Abschnitt des Fahrtwinddurchlasses (52) in den Fahrtwinddurchlass (52) zu leiten.

9. Installationsstruktur des elektrischen Speichergeräts nach einem der Ansprüche 1 bis 7, wobei ein Wärmetauscher (70), durch den eine Kühlflüssigkeit zum Kühlen des Elektromotors (1) fließt, vor dem Fahrtwinddurchlass (52) angeordnet ist.

10. Installationsstruktur des elektrischen Speichergeräts nach Anspruch 1,
wobei elektrisches Equipment (60) neben zumindest einer der elektrischen Speichergeräte (51) der elektrischen Speichergerät-Gruppe (50) vorgesehen ist, und der Fahrtwinddurchlass (52) zwischen dem elektrischen Equipment (60) und der elektrischen Speichergerät (51), die neben dem elektrischen Equipment ist, ausgebildet ist.

## Revendications

1. Structure d'installation de dispositifs de stockage électrique dans une voiture électrique (1) qui comprend un moteur électrique (20, 120) de déplacement et une pluralité des dispositifs de stockage électrique (51) configurés pour stocker l'énergie fournie au moteur électrique (20, 120),
dans laquelle un passage de vent de déplacement (52) s'étendant dans la direction avant et arrière, à travers lequel un vent de déplacement, généré par le déplacement de la voiture électrique, peut passer, est formé dans un groupe de dispositifs de stockage électrique (50) comprenant la pluralité des dispositifs de stockage électrique (51),
**caractérisée en ce qu'**au moins deux dispositifs de stockage électrique (51) dans le groupe de dispositifs de stockage électrique (50) sont divisés en dispositifs de stockage électrique du côté supérieur et inférieur, respectivement, ou en dispositifs de stockage électrique du côté gauche et droit, respectivement, et le passage de vent de déplacement (52) est disposé entre les dispositifs de stockage électrique du côté supérieur et inférieur ou entre les dispositifs de stockage électrique du côté gauche et droit, et des bornes de connexion (51a) des dispositifs de stockage électrique (51) et un câble d'alimentation (55) qui relie les bornes de connexion (51a) l'une à l'autre sont disposés de manière à faire face au passage de vent de déplacement (52).

2. Structure d'installation du dispositif de stockage électrique selon la revendication 1, dans laquelle la pluralité des dispositifs de stockage électrique (51) du groupe de dispositifs de stockage électrique (50) est divisée en deux modules, un module du côté gauche et un module du côté droit, et chaque module est connecté et installé collectivement de manière à ce que les modules soient collectivement attachés à la voiture électrique (1) et détachés de celle-ci.

3. Structure d'installation du dispositif de stockage électrique selon la revendication 2, dans laquelle les modules du côté gauche et droit sont reliés électriquement en série l'un à l'autre par l'intermédiaire d'un relais.

4. Structure d'installation du dispositif de stockage électrique selon l'une quelconque des revendications 1 à 3, dans laquelle une plaque de séparation ayant une propriété d'isolation électrique est disposée dans le passage de vent de déplacement (52), entre les dispositifs de stockage électrique (51) divisés en dispositifs de stockage électrique du côté supérieur et inférieur ou en dispositifs de stockage électrique du côté gauche et droit.

5. Structure d'installation du dispositif de stockage électrique selon l'une quelconque des revendications 1 à 4, dans laquelle un châssis de carrosserie de la voiture électrique (1) comprend un tube de tête (5) qui supporte un arbre de direction et un châssis principal (8) qui s'étend vers l'arrière à partir du tube de tête (5),
le châssis principal (8) est bifurqué en des éléments de châssis gauche et droit, et
le groupe de dispositifs de stockage électrique (50) est interposé entre les éléments de châssis gauche et droit.

6. Structure d'installation du dispositif de stockage électrique selon l'une quelconque des revendications 1 à 4, dans laquelle un châssis de carrosserie de la voiture électrique (1) comprend un tube de tête (5) qui supporte un arbre de direction et un châssis principal (8) qui s'étend vers l'arrière à partir du tube de tête (5), et
la pluralité des dispositifs de stockage électrique (51) du groupe de dispositifs de stockage électrique (50) sont divisés en groupes gauche et droit de sorte que le châssis principal (8) est situé au centre d'une carrosserie de véhicule dans une direction de largeur, et le passage de vent de déplacement (52) est formé sous le cadre principal (8).

7. Structure d'installation du dispositif de stockage électrique selon la revendication 6, dans laquelle la pluralité des dispositifs de stockage électrique (51) du groupe de dispositifs de stockage électrique (50) est installée sur un support (82) qui pend vers le bas à partir du châssis principal (8), dans le passage de vent de déplacement (52).

8. Structure d'installation du dispositif de stockage électrique selon l'une quelconque des revendications 1 à 7, dans laquelle un conduit de guidage de vent (57) est prévu pour guider le vent de déplacement dans le passage de vent de déplacement (52) à partir d'une partie avant du passage de vent de déplacement (52).

9. Structure d'installation du dispositif de stockage électrique selon l'une quelconque des revendications 1 à 7, dans laquelle un échangeur de chaleur (70) à travers lequel circule un liquide de refroidissement pour refroidir le moteur électrique (1) est disposé devant le passage de vent de déplacement (52).

10. Structure d'installation du dispositif de stockage électrique selon la revendication 1, dans laquelle un équipement électronique (60) est prévu à côté d'au moins l'un des dispositifs de stockage électrique (51) du groupe de dispositifs de stockage électrique (50), et le passage de vent de déplacement (52) est formé entre l'équipement électronique (60) et le dispositif de stockage électrique (51) qui est à côté de l'équipement électronique (60).
